# EUROPÄISCHE PATENTSCHRIFT

(11) **EP 1 318 064 B1**
(45) Veröffentlichungstag und Bekanntmachung des Hinweises auf die Patenterteilung: **13.07.2005**
(21) Anmeldenummer: 02023570.1
(22) Anmeldetag: 23.10.2002
(51) Int. Cl.: B62D 33/02, B62D 21/02

(54) **Modular aufgebauter Tragrahmen für ein Nutzfahrzeug**
Modular chassis for a truck
Châssis modulaire pour un camion

(30) Priorität: 04.12.2001 DE 10159468
(43) Veröffentlichungstag der Anmeldung: 11.06.2003
(73) Patentinhaber: DaimlerChrysler AG, 70567 Stuttgart (DE)
(72) Erfinder: Grimm, Karl-Heinz, 72770 Reutlingen (DE); Hagemann, Georg Stefan, 70327 Stuttgart (DE); Martin, Gerd, 70327 Stuttgart (DE)

(56) Entgegenhaltungen:
- EP-A- 0 591 715
- DE-A- 2 117 414
- DE-U- 9 308 329

## Beschreibung

Die Erfindung betrifft einen modular aufgebauten Tragrahmen für ein Nutzfahrzeug, insbesondere für einen Lastkraftwagen, mit den Merkmalen des Oberbegriffs des Anspruchs 1.

Aus der DE 43 22 717 A1 ist ein derartiger Tragrahmen bekannt, umfassend ein Frontmodul, das einen Vorderachsbereich des Fahrzeugs umfaßt, ein Heckmodul, das einen Hinterachsbereich des Fahrzeugs umfaßt und ein Mittelmodul, das Frontmodul und Heckmodul miteinander verbindet. Jedes Modul weist zwei Längsträger auf, die parallel zur Fahrzeuglängsachse verlaufen und quer zur Fahrzeuglängsachse voneinander beabstandet sind. Die einzelnen Module sind über ihre Längsträger miteinander verbunden. Die Längsträger der einzelnen Module sind jeweils relativ aufwendig als ein- oder mehrteilige Preß- oder Gußteile ausgebildet. Benachbarte Module sind an ihren Schnittstellen über axial wirkende Steckverbindungen miteinander verbunden, die an den Längsträgern ausgebildet sind. Da es sich bei den Längsträgern des bekannten Tragrahmens um sehr komplexe Bauteile handelt, gestaltet sich die Variantenbildung relativ kostspielig.

Die vorliegende Erfindung beschäftigt sich mit dem Problem, für einen Tragrahmen der eingangs genannten Art einen Weg aufzuzeigen, der eine preiswertere Variantenbildung ermöglicht.

Dieses Problem wird erfindungsgemäß durch den Gegenstand des Anspruchs 1 gelöst. Vorteilhafte Ausführungsformen sind Gegenstand der abhängigen Ansprüche.

Die Erfindung beruht auf dem allgemeinen Gedanken, bei den Modulen die Längsträger jeweils als gebaute Längsträger auszubilden. Jeder gebaute Längsträger besteht aus einem Obergurt und aus einem Untergurt, die über einen oder mehrere Verbindungsstege miteinander verbunden sind. Der Aufbau der Längsträger kann durch Variation der einzelnen Bestandteile leicht verändert werden, wodurch sich die Variantenbildung für den Tragrahmen preiswerter realisieren läßt. Durch den Vorschlag, benachbarte Module über deren Obergurte und Untergurte zu koppeln, kann eine effektive Übertragung von Zug- und Druckkräften gewährleistet werden.

Zweckmäßig sind die Obergurte und die Untergurte aller Module als Blechformteile ausgebildet. Die Längsträger und somit die Module und letztlich der komplette Tragrahmen können somit sehr preiswert hergestellt werden. Darüber hinaus können Blechformteile einfach variiert werden, beispielsweise hinsichtlich ihrer Materialstärke, ohne dass hierzu ein großer Aufwand erforderlich ist. Dementsprechend erleichtert auch diese Maßnahme die Variantenbildung.

Von besonderem Interesse ist eine Ausführungsform, bei der mehrere, die Obergurte eines Moduls miteinander verbindende obere Querträger und/oder die Untergurte eines Moduls miteinander verbindende untere Querträger, insbesondere modulübergreifend, als Gleichteile ausgebildet sind. Alternativ oder zusätzlich können auch mehrere Verbindungsstege, insbesondere modulübergreifend, als Gleichteile ausgebildet sein. Alternativ oder zusätzlich können auch mehrere Obergurte und Untergurte, insbesondere modulübergreifend, als Gleichteile ausgebildet sein. Die Ausbildung von Gleichteilen erhöht die Stückzahlen und senkt die Einzelteilkosten.

Der erfindungsgemäß aufgebaute Tragrahmen eignet sich in besonderer Weise für eine Verwendung in einem Modulsystem. Um verschiedene Fahrzeugvarianten mit unterschiedlichem Radstand auszubilden, können verschiedene Mittelmodule zur Anwendung kommen, die sich hinsichtlich ihrer Erstreckung in Fahrzeuglängsrichtung voneinander unterscheiden. Zum Aufbau verschiedener Fahrzeugtypen, die sich hinsichtlich ihres Hecküberstandes voneinander unterscheiden, können unterschiedliche Heckmodule verwendet werden, die sich hinsichtlich ihrer Erstreckung in Fahrzeuglängsrichtung voneinander unterscheiden. Die Variantenbildung für die Tragrahmen ist bei einem derartigen Modulsystem somit extrem vereinfacht.

Weitere wichtige Merkmale und Vorteile der Erfindung ergeben sich aus den Unteransprüchen, aus den Zeichnungen und aus der zugehörigen Figurenbeschreibung anhand der Zeichnungen.

Ein bevorzugtes Ausführungsbeispiel der Erfindung ist in den Zeichnungen dargestellt und wird in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: eine perspektivische Ansicht auf einen Tragrahmen nach der Erfindung,
- Fig. 2: eine perspektivische Ansicht auf ein Frontmodul des Tragrahmens aus Fig. 1,
- Fig. 3: eine perspektivische Ansicht auf ein Mittelmodul des Tragrahmens aus Fig. 1 und
- Fig. 4: eine perspektivische Ansicht auf ein Heckmodul des Tragrahmens aus Fig. 1.

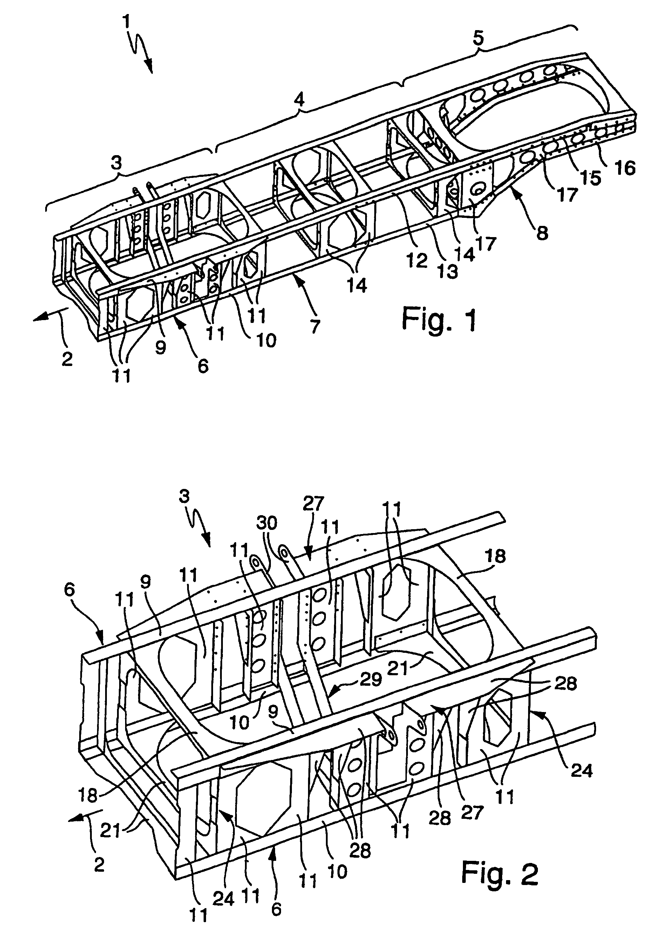

Entsprechend Fig. 1 weist ein erfindungsgemäßer Tragrahmen 1 eines Nutzfahrzeugs, insbesondere eines Lastkraftwagens, bezüglich einer durch einen Pfeil symbolisierten Fahrzeuglängsrichtung 2 von vorn nach hinten ein Frontmodul 3, ein Mittelmodul 4 und ein Heckmodul 5 auf. Die einzelnen Module 3 bis 5 sind in Fig. 1 durch geschweifte Klammern gekennzeichnet. Das Frontmodul 3 umfaßt dabei einen Vorderachsbereich mit einer oder mehreren, hier nicht gezeigten Vorderachsen. In der hier gezeigten Ausführungsform ist das Frontmodul zur Aufnahme einer Vorderachse mit Einzelradaufhängung ausgestaltet. Desweiteren kann das Frontmodul zur Aufnahme eines Antriebsaggregats sowie eines Getriebes ausgebildet sein. Außerdem kann sich auf dem Frontmodul 3 ein Fahrerhaus abstützen.

Über das Mittelmodul 4 sind das Frontmodul 3 und das Heckmodul 5 miteinander verbunden. Das Mittelmodul 4 dient im wesentlichen zur Übertragung von Schub und Zugkräften zwischen Heckmodul 5 und Frontmodul 3. Desweiteren kann - je nach Nutzfahrzeugtyp - auf dem Mittelmodul 4 zumindest ein Teil eines Fahrzeugaufbaus abgestützt sein.

Das Heckmodul 5 ist einem Hinterachsbereich des Fahrzeugs zugeordnet, der eine oder mehrere Hinterachsen umfassen kann. Im hier gezeigten Beispiel ist das Heckmodul 5 für eine als Starrachse ausgebildete Hinterachse ausgestaltet.

Jedes Modul 3 bis 5 weist auf jeder Fahrzeugseite einen Längsträger 6 bzw. 7 bzw. 8 auf. Diese Längsträger 6 bis 8 verlaufen dabei parallel zur Fahrzeuglängsrichtung 2. Über diese Längsträger 6 bis 8 sind die benachbarten Module 3 bis 5 miteinander verbunden. Entsprechende Schnittstellen sind in Fig. 1 nicht erkennbar. Erfindungsgemäß sind die einzelnen Längsträger 6 bis 8 jeweils als gebaute Längsträger 6 bis 8 ausgebildet. Dementsprechend sind die beiden Frontmodul-Längsträger 6 jeweils aus einem Obergurt 9, aus einem Untergurt 10 sowie aus mehreren Verbindungsstegen 11 zusammengebaut, wobei die Verbindungsstege 11 sich im wesentlichen vertikal erstrecken und den Obergurt 9 mit dem zugehörigen Untergurt 10 verbinden. In entsprechender Weise sind auch die Mittelteil-Längsträger 7 jeweils aus einem Obergurt 12, einem Untergurt 13 und mehreren, den Obergurt 12 mit dem Untergurt 13 verbindenden Verbindungsstegen 14 zusammengebaut. Schließlich sind auch die Heckmodul-Längsträger 8 jeweils aus einem Obergurt 15 und einem Untergurt 16 sowie aus mehreren, Obergurt 15 und Untergurt 16 miteinander verbindenden Verbindungsstegen 17 zusammengebaut.

Von besonderem Vorteil ist hier, dass alle Module 3 bis 5 über ihre Obergurte 9, 12, 15 sowie über ihre Untergurte 10, 13, 16 miteinander verbunden sind. Hierdurch gestaltet sich die Anbindung der einzelnen Module 3 bis 5 aneinander besonders einfach. Entsprechend den Fig. 1 bis 4 besitzen die Obergurte 9, 12, 15 und die Untergurte 10, 13, 16 im Querschnitt hier jeweils ein L-Profil. Beispielsweise können die Obergurte 9, 12, 15 und die Untergurte 10, 13, 16 dadurch besonders preiswert, insbesondere als Blechformteile, hergestellt werden. Darüber hinaus ergibt sich durch die L-Profile die Möglichkeit, benachbarte Obergurte 9, 12, 15 und benachbarte Untergurte 10, 13, 16 so anzuordnen, dass sie sich im Bereich ihrer Enden direkt oder mittelbar über entsprechende Winkelstücke überlappen, wodurch sich die gegenseitige Befestigung besonders einfach, z.B. mittels einer Verschraubung, realisieren läßt.

Bei jedem Modul 3 bis 5 sind die Obergurte 9, 12, 15 durch obere Querträger 18 bzw. 19 bzw. 20 miteinander verbunden. Diese oberen Querträger 18, 19, 20 erstrecken sich dabei im wesentlichen horizontal und quer zur Fahrzeuglängsrichtung 2. In entsprechender Weise sind auch die Untergurte 10, 13, 16 der Module 3 bis 5 jeweils über untere Querträger 21 bzw. 22 bzw. 23 miteinander verbunden, wobei auch die unteren Querträger 21, 22, 23 im wesentlichen quer zur Fahrzeuglängsrichtung 2 und horizontal verlaufen. Zweckmäßig sind die Verbindungsstege 11, 14, 17 so positioniert, dass über diese außerdem zumindest einige der oberen Querträger 18, 19, 20 mit den vertikal darunter angeordneten unteren Querträgern 21, 22, 23 verbunden werden können. Durch diese Bauweise lassen sich innerhalb der einzelnen Module 3 bis 5 in einzelnen Axialabschnitte spantartige Verbundrahmen 24 bzw. 25 bzw. 26 ausbilden, die ringförmig geschlossen sind und bezüglich der Fahrzeugslängsrichtung 2 eine rechteckige Kontur aufweisen. Jeder dieser Verbundrahmen 24, 25, 26 ist an seinen vier Ecken mit den Obergurten 9, 12, 15 bzw. mit den Untergurten 10, 13, 16 des zugehörigen Moduls 3, 4, 5 verbunden. Mit Hilfe dieser Verbundrahmen 24, 25, 26 können die einzelnen Module 3 bis 5 und somit der gesamte Tragrahmen 1 hohe Steifigkeitswerte, insbesondere eine hohe Verwindungssteifigkeit, erhalten.

Entsprechend Fig. 2 ist an den Längsträgern 6 des Frontmoduls 3 auf jeder Fahrzeugseite jeweils eine Konsole 27 angebaut, die beispielsweise aus mehreren Winkelblechen 28 besteht. In diese Konsolen 27 ist ein Querjoch 29 integriert, das sich quer zur Fahrzeuglängsrichtung 2 erstreckt und im wesentlichen aus zwei entsprechend geformten Blechteilen 30 gebildet ist. An den Enden des Querjochs 29 kann auf jeder Fahrzeugseite ein, hier nicht gezeigtes Feder- und Dämpferbein einer Einzelradaufhängung abgestützt sein. An den Konsolen 27 können außerdem hier nicht gezeigte Lager für Querlenker der Einzelradaufhängung angebaut sein.

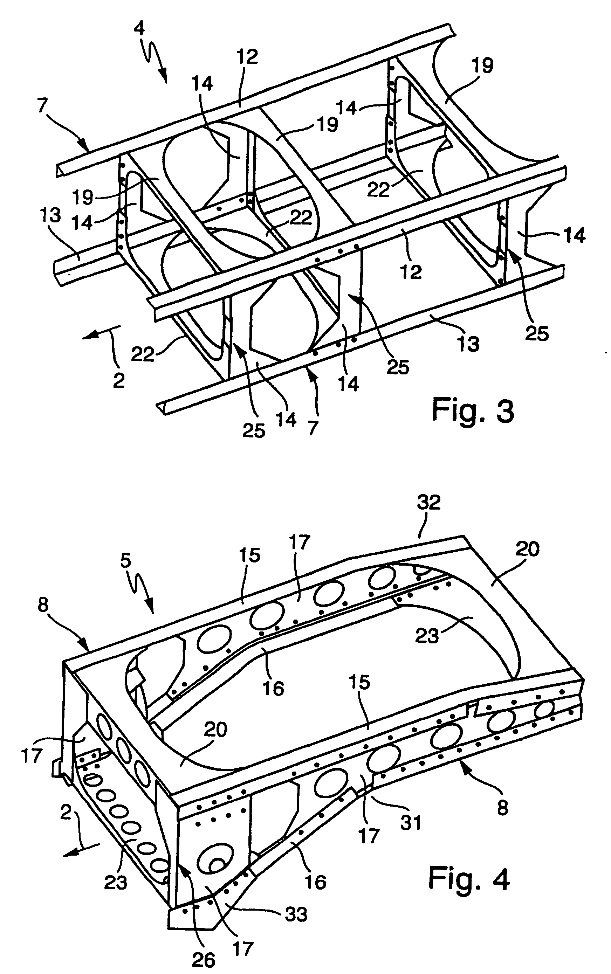

Entsprechend Fig. 4 kann am Heckmodul 5 an dessen Längsträgern 8, z.B. im Bereich des Verbundrahmens 26 auf jeder Fahrzeugseite ein hier nicht gezeigter Längslenkerlagerbock angebaut sein. An einem derartigen Längslenkerlagerbock kann ein ebenfalls nicht gezeigter Längslenker einer Hinterachse des Fahrzeugs gelagert sein. Beispielsweise kann an den Untergurten 16 jeweils eine zusätzliche Lagerkonsole 33 angebaut sein. Gemäß Fig. 4 sind die Untergurte 16 der Heckmodul-Längsträger 8 zweifach abgewinkelt, um dadurch einen unteren Einzug 31 auszubilden. Dieser untere Einzug 31 kann beispielsweise für die Durchführung einer als Starrachse ausgebildeten Hinterachse benötigt werden. In entsprechender Weise sind hier die Obergurte 15 der Heckmodul-Längsträger 8 einfach abgewinkelt, um dadurch einen oberen Einzug 32 zu realisieren. Wenn das Fahrzeug beispielsweise als Sattelschlepperzugmaschine ausgebildet ist, kann es erforderlich sein, das Fahrzeug am Heck mit einem derartigen oberen Einzug 32 auszustatten.

Auf diese Weise werden Anbauteile, die für die Achsführung und Achsfederung erforderlich sind, in die Tragstruktur des Frontmoduls 3 bzw. des Heckmoduls 5 integriert, in dem die genannten Anbauten zusätzlich zur Versteifung der Tragstruktur bzw. zur Verbindung der einzelnen Komponenten der Tragstruktur beitragen. Beispielsweise kann eine Lagerkonsole oder dergleichen als Verbindungssteg 11, 14, 17 ausgestaltet sein. Hierdurch ergibt sich eine Multifunktionalität einzelner Bauteile, wodurch Materialanhäufungen vermieden werden und Gewichtseinsparungen realisierbar sind.

Die Bauweise der Module 3 bis 5 vereinfacht die Variantenbildung, da die einzelnen Komponenten der Module 3 bis 5 vorzugsweise als Blechformteile ausgebildet sind, deren Kontur und Materialstärke relativ einfach beeinflußt werden kann. Zweckmäßig sind daher die einzelnen Verbindungsstege 11, 14, 17 sowie die oberen Querträger 18, 19, 20 und die unteren Querträger 21, 22, 23 als Blechformteile ausgebildet. Von besonderem Vorteil ist es außerdem, wenn die oberen Querträger 18, 19, 20 und die unteren Querträger 21, 22, 23 als Gleichteile ausgebildet sind. Des weiteren werden auch die Verbindungsstege 11, 14, 17 als Gleichteile hergestellt. Bei der hier gezeigten Ausführungsform sind außerdem die Obergurte 9, 12 und die Untergurte 10, 13 des Frontmoduls 3 bzw. des Mittelmoduls 4 ebenfalls als Gleichteile ausgebildet.

Ein wesentlicher Vorteil des erfindungsgemäßen Tragrahmens 1 besteht darin, dass die Längen- und Einsatzvarianz der damit ausgestatteten Fahrzeuge durch Kombination unterschiedlicher Mittelmodule und Heckmodule 5 erfolgen kann, ohne dass dafür aufwendige Längsträgerwerkzeuge zu deren Herstellung erforderlich sind. Der gebaute Tragrahmen 1 ermöglicht eine optimale Anpassung der Rahmenabmessungen an das Gesamtgewicht und an den Einsatzzweck des Fahrzeugs. Durch die konzeptionell vorhandene große Querschnittsfläche des Tragrahmens 1 und durch eine geeignete Werkstoffwahl kann zusätzlich das Eigengewicht des Tragrahmens 1 erheblich reduziert werden. Außerdem können die einfach ausgebildeten Blechformteile schnell an die Erfordernisse neuer Fahrzeuge angepaßt und ebenso einfach hergestellt werden. Je nach Gesamtgewicht und Einsatzzweck können die Blechstärken ausgewählt werden, wozu es keines großen Werkzeugaufwands bedarf.

Die drei Module können abseits einer Endmontagelinie vormontiert werden, wodurch die Durchlaufzeit zur Komplettierung des Tragrahmens 1 bzw. zur Montage des Gesamtfahrzeuges reduziert werden kann. Die vorgeschlagene Verschraubung der einzelnen Teile ermöglicht eine flexible Produktion unterschiedlicher Baumuster, wobei ebenso eine flexible automatisierte Produktion realisierbar ist.

Die erfindungsgemäß vorgeschlagene Rahmenbauweise ermöglicht relativ große Querschnitte, wodurch sich entsprechend große Trägheitsmomente und Widerstandsmomente ergeben. Der Tragrahmen 1 wird dadurch relativ steif. Desweiteren ermöglicht der große Querschnitt breite Anbindungsstellen für die Krafteinleitung, wodurch die Biegebelastungen des Tragrahmens 1 reduziert werden.

Das mit Hilfe des erfindungsgemäßen Tragrahmens 1 aufgebaute Fahrzeug kann hinsichtlich seines Radstandes durch die Verwendung verschiedener Mittelmodule 4 variiert werden, wenn innerhalb eines Modulsystems verschiedene Mittelmodule 4 bereitgestellt werden, die sich hinsichtlich ihrer Erstreckungen in Fahrzeuglängsrichtung 2 voneinander unterscheiden. Desweiteren kann bei den Fahrzeugen der Hecküberhang variiert werden, in dem verschiedene Heckmodule 5 zum Einsatz kommen. Innerhalb eines Modulsystems wird dies dadurch realisiert, dass mehrere verschiedene Heckmodule 5 bereitgestellt werden, die sich hinsichtlich ihrer Erstreckung in Fahrzeuglängsrichtung 2 voneinander unterscheiden.

## Patentansprüche

1. Modular aufgebauter Tragrahmen für ein Nutzfahrzeug, insbesondere Lastkraftwagen,
- mit einem Frontmodul (3), das einen Vorderachsbereich des Fahrzeugs umfaßt,
- mit einem Heckmodul (5), das einen Hinterachsbereich des Fahrzeugs umfaßt,
- mit einem Mittelmodul (4), das Frontmodul (3) und Heckmodul (5) miteinander verbindet,
- wobei jedes Modul (3, 4, 5) zwei Längsträger (6, 7, 8) aufweist, die parallel zur Fahrzeuglängsachse (2) verlaufen und quer zur Fahrzeuglängsachse (2) voneinander beabstandet sind,
- wobei die Module (3, 4, 5) über ihre Längsträger (6, 7, 8) miteinander verbunden sind,
**dadurch gekennzeichnet,**
- **dass** bei jedem Modul (3, 4, 5) beide Längsträger (6, 7, 8) jeweils aus einem Obergurt (9, 12, 15), einem Untergurt (10, 13, 16) und mehreren Obergurt (9, 12, 15) und Untergurt (10, 13, 16) miteinander verbindenden Verbindungsstegen (11, 14, 17) zusammengebaut sind,
- wobei auf jeder Fahrzeugseite die Obergurte (9, 12, 15) und die Untergurte (10, 13, 16) benachbarter Module (3, 4, 5) miteinander verbunden sind.

2. Tragrahmen nach Anspruch 1,
**dadurch gekennzeichnet,**
**dass** die Obergurte (9, 12, 15) und die Untergurte (10, 13, 16) als Blechformteile ausgebildet sind.

3. Tragrahmen nach Anspruch 1 oder 2,
**dadurch gekennzeichnet,**
**dass** die Obergurte (9, 12, 15) und die Untergurte (10, 13, 16) ein L-Profil aufweisen.

4. Tragrahmen nach einem der Ansprüche 1 bis 3,
**dadurch gekennzeichnet,**
**dass** sich benachbarte Obergurte (9, 12, 15) und Untergurte (10, 13, 16) im Bereich ihrer Enden überlappen und miteinander verschraubt sind oder durch überlappende L-Winkel-Einlagen miteinander verschraubt sind.

5. Tragrahmen nach einem der Ansprüche 1 bis 4,
**dadurch gekennzeichnet,**
**dass** bei jedem Modul (3, 4, 5) die Obergurte (9, 12, 15) durch obere Querträger (18, 19, 20) und/oder die Untergurte (10, 13, 16) durch untere Querträger (21, 22, 23) miteinander verbunden sind.

6. Tragrahmen nach Anspruch 5,
**dadurch gekennzeichnet,**
**dass** zumindest einer der oberen Querträger (18, 19, 20) auf beiden Fahrzeugseiten über einen der Verbindungsstege (11, 14, 17) mit einem der unteren Querträger (21, 22, 23) verbunden ist.

7. Tragrahmen nach Anspruch 6,
**dadurch gekennzeichnet,**
**dass** der obere Querträger (18, 19, 20) und der über die zwei Verbindungsstege (11, 14, 17) damit verbundene untere Querträger (21, 22, 23) vertikal übereinander angeordnet sind und zusammen mit den beiden Verbindungsstegen (11, 14, 17) einen ringförmig geschlossenen, rechteckigen Verbundrahmen (24, 25, 26) bilden, der an seinen Ecken mit den Obergurten (9, 12, 15) und mit den Untergurten (10, 13, 16) verbunden ist.

8. Tragrahmen nach einem der Ansprüche 1 bis 7,
**dadurch gekennzeichnet,**
**dass** die Verbindungsstege (11, 14, 17) und/oder die oberen Querträger (18, 19, 20) und/oder die unteren Querträger (21, 22, 23) als Blechformteile ausgebildet sind.

9. Tragrahmen nach einem der Ansprüche 1 bis 8,
**dadurch gekennzeichnet,**
**dass** mehrere obere Querträger (18, 19, 20) und/oder mehrere untere Querträger (21, 22, 23) als Gleichteile ausgebildet sind und/oder dass mehrere Verbindungsstege (11, 14, 17) als Gleichteile ausgebildet sind und/oder dass mehrere Obergurte (9, 12, 15) und/oder mehrere Untergurte (10, 13, 16) als Gleichteile ausgebildet sind.

10. Tragrahmen nach einem der Ansprüche 1 bis 9,
**dadurch gekennzeichnet,**
**dass** an den Längsträgern (6) des Frontmoduls (3) jeweils eine Konsole (27) angebaut ist, an der sich ein Feder- oder Dämpferbein einer Einzelradaufhängung abstützt und an der ein Querlenker der Einzelradaufhängung gelagert ist.

11. Tragrahmen nach Anspruch 10,
**dadurch gekennzeichnet,**
**dass** das Frontmodul (3) ein Querjoch (29) aufweist, das an die Längsträger (6) angebaut ist und an dem die Feder- und/oder Dämpferbeine abgestützt sind.

12. Tragrahmen nach einem der Ansprüche 1 bis 11,
**dadurch gekennzeichnet,**
**dass** an den Längsträgern (8) des Heckmoduls (5) jeweils ein Längslenkerlagerbock angebaut ist, an dem ein Längslenker einer Hinterachse gelagert ist.

13. Tragrahmen nach einem der Ansprüche 1 bis 12,
**dadurch gekennzeichnet,**
**dass** bei den Längsträgern (8) zur Ausbildung eines unteren Einzugs (31) jeweils der Untergurt (16) einfach oder mehrfach abgewinkelt ist und/oder zur Ausbildung eines oberen Einzugs (32) jeweils der Obergurt (15) einfach oder mehrfach abgewinkelt ist.

## Claims

1. Chassis of a modular construction for a utility vehicle, in particular a truck,
- with a front module (3) incorporating a front axle region of the vehicle,
- with a rear module (5) incorporating a rear axle region of the vehicle,
- with centre module (4) connecting the front module (3) and the rear module (5) to one another,
- each of which modules (3, 4, 5) has two longitudinal members (6, 7, 8) which extend parallel with the vehicle longitudinal axis (2) and are spaced apart from one another transversely to the vehicle longitudinal axis (2),
- which modules (3, 4, 5) are connected to one another by means of their longitudinal members (6, 7, 8),
**characterised in that**
- both longitudinal members (6, 7, 8) of every module (3, 4, 5) are made up of a top strut (9, 12, 15), a bottom strut (10, 13, 16) and several connecting webs (11, 14, 17, connecting the top strut (9, 12, 15) and bottom strut (10, 13, 16) to one another,
- the top struts (9, 12, 15) and bottom struts (10, 13, 16) of adjacent modules (3, 4, 5) are connected to one another on each vehicle side.

2. Chassis as claimed in claim 1,
**characterised in that**
the top struts (9, 12, 15) and the bottom struts (10, 13, 16) are sheet metal formed parts.

3. Chassis as claimed in claim 1 or 2,
**characterised in that**
the top struts (9, 12, 15) and the bottom struts (10, 13, 16) have an L-shaped contour.

4. Chassis as claimed in one of claims 1 to 3,
**characterised in that** adjacent top struts (9, 12, 15) and bottom struts (10, 13, 16) overlap in the region of their ends and are screwed together or are screwed together by overlapping L-angled inserts.

5. Chassis as claimed in one of claims 1 to 4,
**characterised in that**
the top struts (9, 12, 15) of every module are connected to one another by top cross-members (18, 19, 20) and/or the bottom struts (10, 13, 16) are connected to one another by bottom cross-members (21, 22, 23).

6. Chassis as claimed in claim 5,
**characterised in that**
at least one of the top cross-members (18, 19, 20) on both vehicle sides is connected to one of the bottom cross-members 921, 22, 23) by means of one of the connecting webs (11, 14, 17).

7. Chassis as claimed in claim 6,
**characterised in that**
the top cross-member (18, 19, 20) and the bottom cross-member (21, 22, 23) connected to it by the two connecting webs (11, 14, 17) are disposed vertically, one above the other, and, in conjunction with the two connecting webs (11, 14, 17) form an annularly closed rectangular connected frame (24, 25, 26) which is connected to the top struts (9, 12, 15) and to the bottom struts (10, 13, 16) at its corners.

8. Chassis as claimed in one of claims 1 to 7,
**characterised in that**
the connecting webs (11, 14, 17) and/or the top cross-members (18, 19, 20) and/or the bottom cross-members (21, 22, 23) are sheet metal formed parts.

9. Chassis as claimed in one of claims 1 to 8,
**characterised in that**
several top cross-members (18, 19, 20) and/or several bottom cross-members (21, 22, 23) are designed as identical parts and/or several connecting webs (11, 14, 17) are designed as identical parts and/or several top struts (9, 12, 15) and/or several bottom struts (10, 13, 16) are designed as identical parts.

10. Chassis as claimed in one of claims 1 to 9,
**characterised in that**
a bracket (27) is respectively built onto the longitudinal members (6) of the front module (3), on which a transverse control arm or damping arm of an independent wheel suspension is supported and on which a transverse control arm of the independent wheel suspension is mounted.

11. Chassis as claimed in claim 10,
**characterised in that**
the front module (3) has a transverse yoke (29) which is built onto the longitudinal members (6) and supported on the transverse control arm and/or damping arm.

12. Chassis as claimed in one of claims 1 to 11, **characterised in that** a longitudinal control arm bearing block is attached to the longitudinal members (8) of the rear module (5), on which a longitudinal control arm of a rear axle is mounted.

13. Chassis as claimed in one of claims 1 to 12,
**characterised in that**,
in the case of the longitudinal members (8), each bottom strut (16) is bent back one or more times in order to form a bottom catchment (31) and/or each top strut (15) is bent back one or more times in order to form a top catchment (32).

## Revendications

1. Cadre porteur à structure modulaire pour un véhicule utilitaire, notamment un camion,
- avec un module frontal (3) entourant une zone de l'essieu avant du véhicule,
- avec un module arrière (5) entourant une zone de l'essieu arrière du véhicule,
- avec un module central (4) reliant le module frontal (3) au module arrière (5)
- où chaque module (3, 4, 5) présente deux longerons (6, 7, 8) s'étendant parallèlement à l'axe longitudinal du véhicule (2) et à distance l'un de l'autre transversalement à l'axe longitudinal du véhicule (2),
- les modules (3, 4, 5) étant reliés entre eux par leurs longerons (6, 7, 8),
**caractérisé en ce que**
- pour chaque module (3, 4, 5), les deux longerons (6, 7, 8) sont composés chacun d'une membrure supérieure (9, 12, 15), d'une membrure inférieure (10, 13, 16) et de plusieurs entretoises de liaison (11, 14, 17) raccordant la membrure supérieure (9, 12, 15) à la membrure inférieure (10, 13, 16),
- les membrures supérieures (9, 12, 15) et les membrures inférieures (10, 13, 16) de modules adjacents (3, 4, 5) étant reliées entre elles sur chaque côté du véhicule.

2. Cadre porteur selon la revendication 1,
**caractérisé en ce que**
les membrures supérieures (9, 12, 15) et les membrures inférieures (10, 13, 16) sont formées comme pièces en tôle profilée.

3. Cadre porteur selon la revendication 1 ou 2,
**caractérisé en ce que**
les membrures supérieures (9, 12, 15) et les membrures inférieures (10, 13, 16) présentent un profil en L.

4. Cadre porteur selon l'une des revendications 1 à 3,
**caractérisé en ce que**
les membrures supérieures (9, 12, 15) et inférieures (10, 13, 16) adjacentes se chevauchent au niveau de leurs extrémités et sont vissées ensemble, ou sont vissées ensemble au moyen d'équerres rapportées chevauchantes en L.

5. Cadre porteur selon l'une des revendications 1 à 4,
**caractérisé en ce que**
pour chaque module (3, 4, 5), les membrures supérieures (9, 12, 15) sont reliées entre elles par des traverses supérieures (18, 19, 20) et/ou les membrures inférieures (10, 13, 16) par des traverses inférieures (21, 22, 23).

6. Cadre porteur selon la revendication 5,
**caractérisé en ce qu'**
au moins une des traverses supérieures (18, 19, 20) sur les deux côtés du véhicule est reliée à une des traverses inférieures (21, 22, 23) par une des entretoises de liaison (11, 14, 17).

7. Cadre porteur selon la revendication 6,
**caractérisé en ce que**
la traverse supérieure (18, 19, 20) et la traverse inférieure (21, 22, 23) qui lui est reliée par les deux entretoises de liaison (11, 14, 17) sont disposées l'une au-dessus de l'autre dans le sens vertical et forment avec les deux entretoises de liaison (11, 14, 17) un cadre de liaison rectangulaire fermé en anneau (24, 25, 26) relié sur ses coins aux membrures supérieures (9, 12, 15) et aux membrures inférieures (10, 13, 16).

8. Cadre porteur selon l'une des revendications 1 à 7,
**caractérisé en ce que**
les entretoises de liaison (11, 14, 17) et/ou les traverses supérieures (18, 19, 20) et/ou les traverses inférieures (21, 22, 23) sont formées comme pièces en tôle profilée.

9. Cadre porteur selon l'une des revendications 1 à 8,
**caractérisé en ce que**
plusieurs traverses supérieures (18, 19, 20) et/ou plusieurs traverses inférieures (21, 22, 23) sont formées comme pièces identiques, et/ou **en ce que** plusieurs entretoises de liaison (11, 14, 17) sont formées comme pièces identiques, et/ou **en ce que** plusieurs membrures supérieures (9, 12, 15) et/ou plusieurs membrures inférieures (10, 13, 16) sont formées comme pièces identiques.

10. Cadre porteur selon l'une des revendications 1 à 9,
**caractérisé en ce qu'**
une console (27) est montée sur les longerons (6) du module frontal (3), contre laquelle s'appuie une jambe élastique ou d'amortisseur d'une suspension de roue simple et sur laquelle est logé un bras oscillant transversal de la suspension de roue simple.

11. Cadre porteur selon la revendication 10,
**caractérisé en ce que**
le module frontal (3) présente une travée (29) montée sur les longerons (6) et contre laquelle s'appuient les jambes élastiques et/ou d'amortisseur.

12. Cadre porteur selon l'une des revendications 1 à 11,
**caractérisé en ce qu'**
un palier de bras oscillant longitudinal est monté sur les longerons (8) du module arrière (5), sur lequel est logé un bras oscillant longitudinal d'un essieu arrière.

13. Cadre porteur selon l'une des revendications 1 à 12,
**caractérisé en ce que**
pour la formation d'un renfoncement inférieur (31) sur les longerons (8), la membrure inférieure (16) est coudée une ou plusieurs fois et/ou pour la formation d'un renfoncement supérieur (32), la membrure supérieure (15) est coudée une ou plusieurs fois.
